# EUROPÄISCHE PATENTANMELDUNG

(11) **EP 1 408 211 A2**
(43) Veröffentlichungstag der Anmeldung: **14.04.2004**
(21) Anmeldenummer: 03016392.7
(22) Anmeldetag: 21.07.2003
(51) Int. Cl.: F02B 27/02, F02M 35/116

(54) **Luftansaugkanalsystem**

(30) Priorität: 11.10.2002 DE 10247632
(71) Anmelder: Pierburg GmbH, 41460 Neuss (DE)
(72) Erfinder: Hemsing, Axel, 50933 Köln (DE); Huck, Armin, 52074 Aachen (DE); Kühnel, Hans-Ulrich, 41239 Mönchengladbach (DE); Vadlja, Tomislav, 41748 Viersen (DE)
(74) Vertreter: Ter Smitten, Hans

(57) **Zusammenfassung**

In der Erfindung wird ein Luftansaugkanalsystem mit längenveränderbaren Kanälen 7 beschrieben, bei dem eine Verstelleinrichtung 3 über ein Antriebselement 5 angetrieben wird, welches in fester Verbindung mit den ebenfalls fest miteinander verbundenen Verstellelementen 4 und über diese mit einem Abschlußelement 6 steht.

Durch einen solchen Antrieb sowie einer entsprechenden Lagerung und Abdichtung kann die axiale Durchströmung der Verstelleinrichtung 3 optimiert werden, da keine inneren Bauteile die Strömung beinflussen.

## Beschreibung

Die Erfindung betrifft ein Luftansaugkanalsystem für Verbrennungskraftmaschinen insbesondere mit zwei Zylinderreihen in V-Anordnung, wobei ein Gehäuse und eine darin angeordnete um ihre Längsachse drehbare Verstelleinrichtung, die aus einzelnen Verstellelementen zusammengesetzt ist, Luftansaugkanäle bilden, wobei jeder Luftansaugkanal zu einem der insbesondere beidseitig des Luftansaugkanalsystems liegenden Zylindern führt und wobei jedes Verstellelement mindestens eine Lufteintrittsöffnung und mindestens eine Luftaustrittsöffnung aufweist und daß die wirksame Länge der Luftansaugkanäle durch Verdrehen der Verstelleinrichtung im gleichen Drehsinn stufenlos veränderbar ist.

Längenveränderbare Luftansaugkanalsysteme sind allgemein bekannt und werden in verschiedenen Schriften beschrieben. Vor allem für Verbrennungskraftmaschinen mit zwei Zylinderreihen in V-Anordnung sind verschiedene Ausführungen veröffentlicht. Besondere Bedeutung kommt hierbei den Verstellvorrichtungen zu, bei denen trotz der V-Anordnung die Längenänderung aller Ansaugkanäle durch Verdrehen der Verstellelemente im gleichen Drehsinn erfolgt. In der DE 44 37 663 A1 wird eine solche Sauganlage für eine Verbrennungskraftmaschine der V-Bauart beschrieben, die einen rohrförmigen Ansaugverteiler besitzt, von dem beidseitig in Längsrichtung nebeneinander angeordnete Einzelsaugrohre alle im gleichen Drehsinn abzweigen. Mit einem innerhalb des Ansaugverteilers angeordneten Verstellelement ist die wirksame Ansaugkanallänge durch Drehung der Verstellelemente veränderbar. Auch in der noch nicht veröffentlichten Anmeldung mit Aktenzeichen 102 15 604.2 wird ein ähnliches Luftansaugkanalsystem beschrieben, wobei hier jedes Verstellelement zwei Luftaustrittsöffnungen und dazu passend das Gehäuse zwei Luftaustrittsöffnungen zu den Zylindern aufweist, so daß durch die Drehung eines Verstellelementes die Saugrohrlängen zu beiden jeweils an einer Seite des Saugrohres gelegenen Zylindern gleichzeitig verstellt wird.

Nachteilig in den bekannten Ausführungen eines solchen Luftansaugkanalsystems, bei dem die Längenänderung der Ansaugkanäle über Drehung der Verstellelemente im gleichen Drehsinn erfolgt ist, sind der Antrieb, die Dichtung der Verstellelemente untereinander und deren Lagerung. Üblich ist eine Verstellung über eine Antriebswelle, wobei jedes Verstellelement mit der Antriebswelle über ein Aufnahmeteil in formschlüssiger Verbindung steht. Der äußere Zylinder des Verstellelementes ist wiederum über mehrere Stege mit diesem Aufnahmeteil verbunden. Die Lagerung der gesamten Verstelleinheit erfolgt dann über die Wellenlagerung beispielsweise durch Kugellager und wird aufgrund vorhandener Unrundheiten der Welle häufig als überbestimmte Drei-Punkt Lagerung ausgeführt. Eine solche Anordnung erfordert einen hohen Montageaufwand insbesondere zur axialen Fixierung der Verstellelemente auf der Welle und enge Fertigungstoleranzen. Des weiteren wird eine freie Luftströmung im Einlaßkanal durch die Stege und auch die Welle verhindert und der dort vorhandene Raum eingeschränkt, so daß Wirbel entstehen und eine gleichmäßige Versorgung auch der in Strömungsrichtung hinteren Zylinder mit Luft eingeschränkt wird.

Aufgabe der Erfindung ist es daher, ein Luftansaugkanalsystem zu schaffen, bei dem auf zusätzliche Einbauten im Einströmkanal weitestgehend verzichtet werden kann, der Montageaufwand reduziert wird, eine zuverlässige Abdichtung der einzelnen Ansaugkanäle untereinander sichergestellt ist und eine robuste kostengünstige Lagerung existiert, wobei gleichzeitig die Fertigungstoleranzen erweitert werden sollen.

Diese Aufgaben werden erfindungsgemäß dadurch gelöst, daß die Verstelleinrichtung zusätzlich zu den Luftansaugkanäle bildenden Verstellelementen ein Antriebselement und ein Abschlußelement aufweist, über die die Verstelleinrichtung drehbar gelagert ist, wobei das Antriebselement an einem ersten axialen Ende und das Abschlußelement an einem zweiten axialen Ende der Verstelleinrichtung angeordnet ist. Dadurch kann auf eine Antriebswelle, welche durch die gesamte Verstelleinheit reicht verzichtet werden und somit auch auf die die Strömung störenden Stege und Einbauten, so daß der Kanal strömungstechnisch optimal gestaltet werden kann. Des weiteren entfällt die aufwendige Montage der einzelnen Verstellelemente auf der Welle.

Erfindungsgemäß sind das Antriebselement, die Verstellelemente und das Abschlußelement fest miteinander verbunden, wodurch eine einheitliche Verstellung der gesamten Verstelleinheit bei Drehung des Antriebselementes sichergestellt wird.

In einer vorteilhaften Ausgestaltung ist die Verbindung der Verstellelemente untereinander und mit dem Antriebselement beziehungsweise dem Abschlußelement durch Reibschweißen hergestellt, wodurch vorhandene Fertigungstoleranzen einfach ausgeglichen werden können und eine zuverlässige Verbindung der Bauteile sichergestellt ist.

Zur gegenseitigen Abdichtung der einzelnen Luftansaugkanäle sind zwischen den einzelnen Elementen der Verstelleinrichtung Dichtringe angeordnet sind.

In einer vorteilhaften Ausführungsform sind diese Dichtringe in Nuten zwischen den Verstellelementen fest angeordnet und greifen im wesentlichen U-förmig um die korrespondierenden Gehäusewände, wodurch eine zuverlässige Abdichtung mit wenigen Montageschritten sichergestellt wird.

Durch die beschriebenen Anordnungen wird es möglich die gesamte Verstelleinrichtung über einen von einer Antriebseinheit angetriebenen Zapfen, der in formschlüssiger Verbindung zum Antriebselement steht, anzutreiben. Dieser Zapfen kann beispielsweise als Vierkantzapfen oder als gerändelter Zapfen bei entsprechender Ausführung der Aufnahme am Antriebselement ausgeführt sein. Dadurch ergibt sich eine einfach zu montierende und demontierbare Verbindung zwischen der Stelleinheit und einer Antriebseinheit.

Der Zapfen kann über ein elastisches Kopplungselement mit einer Antriebswelle der Antriebseinheit verbunden sein, wodurch eine Rückkopplung von Schwingungen der Verstelleinheit auf die Antriebseinheit verhindert wird.

Erfindungsgemäß wird die Verstelleinrichtung im wesentlichen über die äußeren Umfänge des Antriebselements und des Abschlußelementes im Gehäuse gelagert. Es ergibt sich eine einfache 2-Punkt Lagerung, da aufgrund der festen Verbindungen zwischen den Verstellelementen keine Unwuchten ausgeglichen werden müssen.

Die gesamte Verstelleinrichtung ist über eine Lagereinheit im Gehäuse gelagert, die aus mehreren im Inneren und an beiden axialen Enden des Gehäuses angeordneten beziehungsweise auf dem äußeren Umfang des Antriebselementes und des Abschlußelementes jeweils angeordneten ringförmigen Elementen besteht, die miteinander korrespondieren. So kann die Lagereinheit aus je einer auf einem Absatz am äußeren Umfang des Antriebselementes beziehungsweise des Abschlußelementes angeordneten Gleitlagerbuchse, je einem im Inneren des Gehäuses an beiden axialen Enden angeordneten Elastomerring und einem im zusammengebauten Zustand zwischen den beiden Elastomerringen und den beiden Gleitlagerbuchsen jeweils angeordneten Stahlringlager aufgebaut sein. Somit wird eine Lagerung geschaffen, die in ihrem Aufbau einfach und zuverlässig ist, eine einfache Montage ermöglicht und gleichzeitig geringen Verschleiß aufweist.

In einer weiteren vorteilhaften Ausgestaltung der Erfindung weist jeder Luftansaugkanal eine zusätzliche feststehende Durchströmöffnung auf, wobei die Durchströmöffnungen in einen gemeinsamen oder gruppenweise in mehrere Verbindungskanäle einmünden, die im Gehäuse angeordnet sind. Hierdurch wird ein zusätzliches Luftvolumen den Ansaugkanälen zur Verfügung gestellt, wodurch sich der Füllgrad der Zylinder verbessert, so daß ein höheres Drehmoment des Motors erreichbar wird.

Durch diese erfindungsgemäßen Ausführungen wird ein Luftansaugkanalsystem geschaffen, welches nichtzuletzt durch einen geringen Montageaufwand insbesondere der Verstellelemente kostengünstig herzustellen ist, einen weitestgehend frei modellierbaren inneren Eintrittsquerschnitt zur Optimierung der Luftströmung aufweist, eine zuverlässige Abdichtung der einzelnen Ansaugkanäle untereinander sicherstellt und eine robuste kostengünstige Lagerung aufweist, wobei gleichzeitig relativ große Fertigungstoleranzen ausgeglichen werden können.

Ein Ausführungsbeispiel ist in den Figuren dargestellt und wird nachfolgend beschrieben.

Figur 1 zeigt ein erfindungsgemäßes Luftansaugkanalsystem für einen 8-Zylinder V-Motor in geschnittener Darstellung in Seitenansicht.

Figur 2 zeigt einen Ausschnitt des erfindungsgemäßen Luftansaugkanalsystem im Bereich der Lagerung in Seitenansicht.

Figur 3 zeigt einen Schnitt entlang der Linie B-B der Figur 1

Figur 4 zeigt eine perspektivische Ansicht des erfindungsgemäßen Luftansaugkanalsystems ohne Gehäuseoberteil.

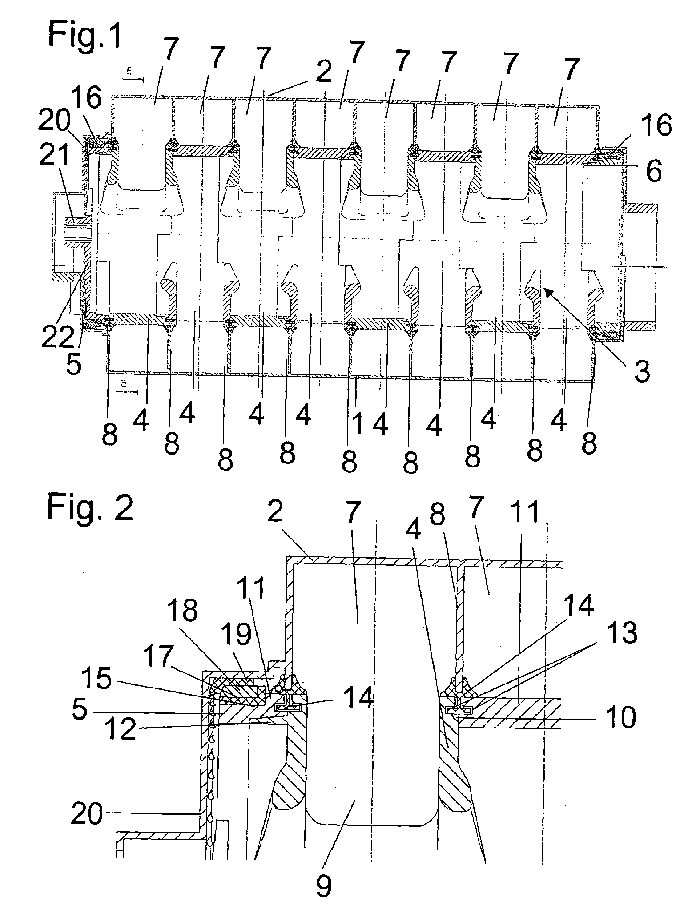

Ein in Figur 1 dargestelltes Luftansaugkanalsystem besteht aus einem Gehäuseunterteil 1 und einem Gehäuseoberteil 2, in welchen eine um ihre Längsachse A drehbare Verstelleinrichtung 3 angeordnet ist. Diese Verstelleinrichtung 3 besteht aus insgesamt acht in Achsrichtung hintereinander angeordneten Verstellelementen 4, einem Antriebselement 5 und einem Abschlußelement 6, wobei das Antriebselement 5 an einem ersten Ende und das Abschlußelement 6 am gegenüberliegenden zweiten Ende der Verstelleinrichtung 3 angeordnet ist. Im zusammengebauten Zustand entstehen Luftansaugkanäle 7 zwischen dem Gehäuse 1,2 und den Verstellelementen 4, die seitlich durch Gehäusewände 8 abgegrenzt werden. Diese Luftansaugkanäle 7 führen zu nicht dargestellten Zylindern einer Verbrennungskraftmaschine, wobei in der vorliegenden Ausführung jeder erste Kanal zu einem linksseitigen Zylinder und jeder zweite Kanal zu einem rechtsseitigen Zylinder führt.

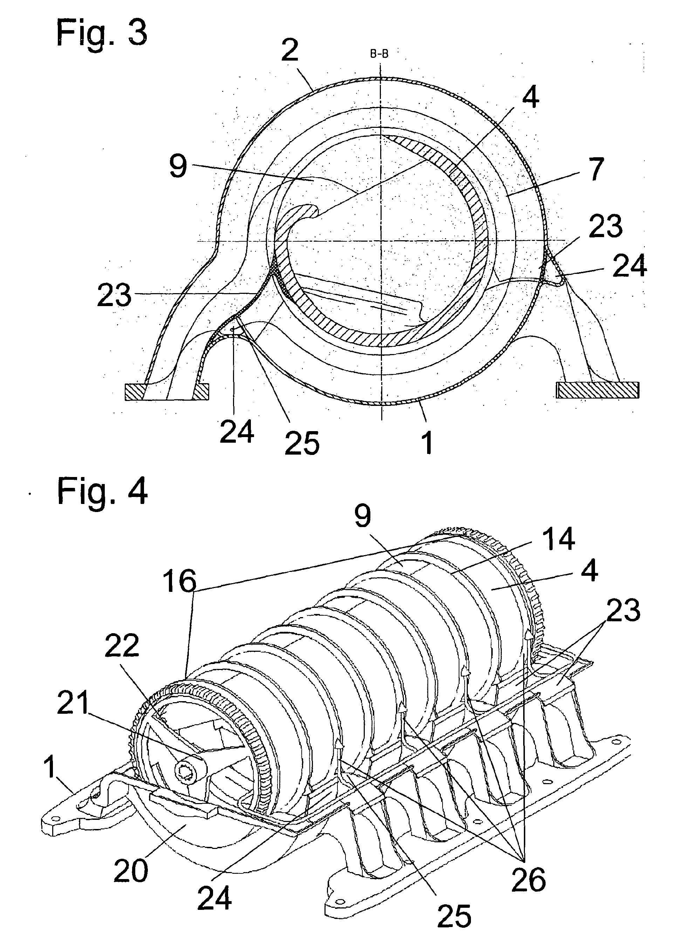

Die Verstellelemente 4 werden in ihrem Inneren axial von Luft durchströmt und weisen jeweils eine Lufteintrittsöffnung 9 (Figur 3) zu den Ansaugkanälen 7 auf. Sie sind untereinander und mit dem Antriebs- bzw. dem Abschlußelement 5,6 über die Seitenwände 10 ihrer radial begrenzenden Ringe 11 fest verbunden. Diese Verbindung kann beispielsweise durch Reibschweißen hergestellt werden. Dazu sind, wie aus Figur 2 ersichtlich über einen Teilbereich des Umfangs dieser Seitenwände 10 entsprechende schräge Vorsprünge 12 und damit korrespondierende Aussparungen an den Verstellelementen 4 vorgesehen. Des weiteren sind in den Seitenwänden 9 Nuten 13 angeordnet, so daß im wesentlichen ringförmige Dichtungen 14, die in diesem Bereich im Querschnitt T-förmig ausgeführt sind, zwischen den Verstellelementen 4 und dem Antriebs- 5 und dem Abschlußelement 6 aufgenommen werden können. Im radial nach außen weisenden Bereich sind diese Dichtringe 14 im Querschnitt U-förmig ausgebildet und umgreifen im eingebauten Zustand die Innenwände 8 des Gehäuses, so daß eine Abdichtung der Luftansaugkanäle 7 untereinander gewährleistet ist.

Das Antriebselement 5 weist ebenso wie das Abschlußelement 6 an seinem axial nach außen weisenden Ende einen Absatz 15 am äußeren Umfang auf, auf dem eine Lagereinheit 16 wie in Figur 2 zu erkennen angeordnet ist, über die die gesamte Verstelleinheit 3 gelagert wird. Diese Lagereinheit 16 besteht aus einer ringförmigen Gleitlagerbuchse 17 die auf dem Absatz 15 des Antriebs- und Abschlußelementes 5,6 angebracht ist, einem darauf angeordnetem Stahlringlager 18 und einem wiederum auf dem Stahlringlager 18 angeordneten Elastomerring 19, der im zusammengebauten Zustand fest in einer entsprechenden Kopfstück 20 des Gehäuses sitzt.

Das Antriebselement 5 besteht neben seinem radial begrenzenden Ring 11 aus einem einen nicht dargestellten Antriebszapfen aufnehmenden Aufnahmeteil 21, welches über Stege 22 mit dem radial begrenzenden Ring 11 verbunden ist. Das in Figur 4 dargestellte Aufnahmeteil 21 dient zur Aufnahme eines nicht dargestellten gerändelten Zapfens, der mit ihr in formschlüssiger Verbindung steht. Dieser Zapfen wird über ein elastisches Koppelelement, welches aus einem Elastomer hergestellt werden kann, von einer Antriebswelle einer Antriebseinheit, beispielsweise eines Elektromotors angetrieben, wodurch die gesamte Verstelleinheit 3 in Drehung versetzt wird und so eine Lageänderung der Lufteintrittsöffnungen 9 und somit wiederum eine Längenänderung der Luftansaugkanäle 7 zustande kommt. Das Abschlußelement 6 besteht lediglich aus dem radial begrenzenden Ring 11 mit Absatz 15.

In Figur 3 und Figur 4 sind Einlegeteile 23 zu erkennen, über die ein zusätzliches Luftvolumen, welches durch einen Verbindungskanal 24 strömt, den Ansaugkanälen 7 über eine Durchströmöffnung 25 zur Verfügung gestellt wird beziehungsweise abgetrennt wird. In Figur 4 ist mit Pfeilen 26 verdeutlicht, daß von dieser Seite jeder zweite Kanal mit dieser zusätzlichen Luft versorgt wird. Entsprechendes gilt für die anderen Kanäle, die von der in dieser Ansicht rückwärtigen Seite mit diesem zusätzlichen Luftstrom versorgt werden.

In Figur 3 wird des weiteren deutlich, daß die axiale Luftströmung im Innern der Verstelleinheit durch keine zusätzlichen Hindernisse beschränkt wird, so daß eine weitgehend freie Strömung im Innern erfolgt und eine Optimierung der Strömung durch entsprechende Einbauten ausgeführt werden könnte.

Mit der beschriebenen Ausführungsform liegt eine Konstruktion vor, die die Vorteile der einfachen Montage, der kostengünstigen Herstellung der weitestgehend frei modellierbaren inneren Eintrittsquerschnitte zur Optimierung der Luftströmung, eine zuverlässige Abdichtung der einzelnen Ansaugkanäle untereinander und eine robuste Lagerung miteinander verbindet.

Veränderungen beipielsweise bezüglich der Anzahl der Verstellelemente beziehungsweise Ansaugkanäle, der Anordnung der Zylinder, der Anzahl der Lufteintrittsöffnungen eines Verstellelementes oder der verwendeten Materialien sind denkbar, ohne den Inhalt der Patentansprüche zu verlassen.

## Patentansprüche

1. Luftansaugkanalsystem für Verbrennungskraftmaschinen insbesondere mit zwei Zylinderreihen in V-Anordnung, wobei ein Gehäuse und eine darin angeordnete um ihre Längsachse drehbare Verstelleinrichtung, die aus einzelnen Verstellelementen zusammengesetzt ist, Luftansaugkanäle bilden, wobei jeder Luftansaugkanal zu einem der insbesondere beidseitig des Luftansaugkanalsystems liegenden Zylindern führt und wobei jedes Verstellelement mindestens eine Lufteintrittsöffnung und mindestens eine Luftaustrittsöffnung aufweist und daß die wirksame Länge der Luftansaugkanäle durch Verdrehen der Verstelleinrichtung im gleichen Drehsinn stufenlos veränderbar ist, **dadurch gekennzeichnet, daß** die Verstelleinrichtung (3) zusätzlich zu den Luftansaugkanäle (7) bildenden Verstellelementen (4) ein Antriebselement (5) und ein Abschlußelement (6) aufweist, über die die Verstelleinrichtung (3) drehbar gelagert ist, wobei das Antriebselement (5) an einem ersten axialen Ende und das Abschlußelement (6) an einem zweiten axialen Ende der Verstelleinrichtung (3) angeordnet ist.

2. Luftansaugkanalsystem nach Anspruch 1, **dadurch gekennzeichnet, daß** das Antriebselement (5), die Verstellelemente (4) und das Abschlußelement (6) fest miteinander verbunden sind.

3. Luftansaugkanalsystem nach Anspruch 2, **dadurch gekennzeichnet, daß** die Verbindung der Verstellelemente (4) untereinander und mit dem Antriebselement (5) beziehungsweise dem Abschlußelement (6) durch Reibschweißen hergestellt ist.

4. Luftansaugkanalsystem nach einem der vorhergehenden Ansprüche, **dadurch gekennzeichnet, daß** zwischen den einzelnen Elementen (4,5,6) der Verstelleinrichtung (3) zur gegenseitigen Abdichtung der einzelnen Luftansaugkanäle (7) Dichtringe (14) angeordnet sind.

5. Luftansaugkanalsystem nach Anspruch 4, **dadurch gekennzeichnet, daß** die Dichtringe (14) in Nuten (13) zwischen den Verstellelementen (4) bzw. dem jeweils benachbarten Verstellelement (4) und dem Antriebselement (5) bzw. dem Abschlußelement (6) fest angeordnet sind und im wesentlichen U-förmig um die korrespondierenden Gehäusewände (8) greifen.

6. Luftansaugkanalsystem nach einem der vorhergehenden Ansprüche, **dadurch gekennzeichnet, daß** die gesamte Verstelleinrichtung (3) über einen von einer Antriebseinheit angetriebenen Zapfen, der in formschlüssiger Verbindung zu einem Aufnahmeteil (21) des Antriebselementes (5) steht, antreibbar ist.

7. Luftansaugkanalsystem nach Anspruch 6, **dadurch gekennzeichnet, daß** der Zapfen über ein elastisches Kopplungselement mit einer Antriebswelle der Antriebseinheit verbunden ist.

8. Luftansaugkanalsystem nach einem der vorhergehenden Ansprüche, **dadurch gekennzeichnet, daß** die Verstelleinrichtung (3) im wesentlichen über die äußeren Umfänge des Antriebselements (5) und des Abschlußelementes (6) im Gehäuse (1,2) gelagert ist.

9. Luftansaugkanalsystem nach Anspruch 8, **dadurch gekennzeichnet, daß** die gesamte Verstelleinrichtung (3) über eine Lagereinheit (16) im Gehäuse (1,2) gelagert ist, die aus mehreren im Inneren und an beiden axialen Enden des Gehäuses (1,2) angeordneten beziehungsweise auf dem äußeren Umfang des Antriebselementes (5) und des Abschlußelementes (6) jeweils angeordneten ringförmigen Elementen (17,18,19) besteht, die miteinander korrespondieren.

10. Luftansaugkanalsystem nach Anspruch 8 oder 9, **dadurch gekennzeichnet, daß** die Lagereinheit (16) aus je einer auf einem Absatz (15) des Antriebselementes (5) beziehungsweise des Abschlußelementes (6) angeordneten Gleitlagerbuchse (17), je einem im Inneren des Gehäuses an beiden axialen Enden angeordneten Elastomerring (19) und einem im zusammengebauten Zustand zwischen den beiden Elastomerringen (19) und den beiden Gleitlagerbuchsen (17) jeweils angeordneten Stahlringlager (18) aufgebaut ist.

11. Luftansaugkanalsystem nach einem der vorhergehenden Ansprüche **dadurch gekennzeichnet, daß** jeder Luftansaugkanal (7) eine zusätzliche feststehende Durchströmöffnung (25) aufweist, wobei die Durchströmöffnungen (25) in einen gemeinsamen oder gruppenweise in mehrere Verbindungskanäle (24) einmünden, die im Gehäuse (1,2) angeordnet sind.
